# EUROPÄISCHE PATENTSCHRIFT

(11) **EP 4 380 738 B1**
(45) Veröffentlichungstag und Bekanntmachung des Hinweises auf die Patenterteilung: **18.06.2025**
(21) Anmeldenummer: 22761060.7
(22) Anmeldetag: 28.07.2022
(51) Int. Cl.: B21D 39/03, B21J 15/30, B21J 15/02, B21J 15/28, B23P 19/06

(54) **VORRICHTUNG ZUM DURCHSETZFÜGEN**
DEVICE FOR CLINCH JOINING
DISPOSITIF D'ASSEMBLAGE PAR RIVETAGE

(30) Priorität: 05.08.2021 DE 102021120409
(43) Veröffentlichungstag der Anmeldung: 12.06.2024
(73) Patentinhaber: TOX PRESSOTECHNIK GmbH & Co. KG, 88250 Weingarten (DE)
(72) Erfinder: MANZ, Markus, 88250 Weingarten (DE); BADENT, Michael, 88250 Weingarten (DE); MAUCHER, Berno, 88368 Bergatreute (DE)
(74) Vertreter: RavensPAT Patentanwälte Partnerschaft mbB
(86) Internationale Anmeldenummer: PCT/EP2022/071151
(87) Internationale Veröffentlichungsnummer: WO 2023/012017

(56) Entgegenhaltungen:
- WO-A1-2014/025608
- DE-U1- 9 217 181
- US-B1- 6 397 654

## Beschreibung

### Stand der Technik

Bei Vorrichtungen, wie Werkzeugen zum umformenden Bearbeiten von Werkstücken, Clinch- oder Stanznietzangen oder Fügezangen zum Setzen von Verbindungs- oder Funktionselementen, wie Bolzen oder Muttern, sind für industrielle Anwendungen unterschiedliche Maschinenkonzepte ausgebildet. Die Maschinenkonzepte beziehen sich vorteilhafterweise auch auf das Zuführen und Weiterbewegen der Werkstücke und/oder Bauteile. Solche Vorrichtungen zum Einwirken auf Werkstückabschnitte bzw. zum Durchsetzfügen sind nachfolgend auch allgemein als Fügezangen bezeichnet.

Als Funktionselemente sind vorzugsweise Einpresselemente zu verstehen, welche im gesetzten Zustand an dem Werkstück eine Zusatzfunktion nach außen aufweisen, beispielsweise einen Verbindungs- oder Befestigungsabschnitt, wie beispielsweise ein Außengewinde zur Verbindung des Verbindungs- oder Befestigungsabschnitts mit einem weiteren Abschnitt.

Folgende Anwendungen bei den oben beschriebenen Anordnungen sind zum Beispiel zu unterscheiden:
- robotergeführte Fügewerkzeuge an einem Roboter, wobei das Fügewerkzeug durch den Roboter an das Bauteil geführt wird,
- roboterbeschickte Fügezangen, wobei das Bauteil am Roboter vorhanden ist und durch den Roboter an das Fügewerkzeug geführt wird,
- handbeschickte Fügezangen,
- maschinenintegrierte Fügezangen, wobei die Fügezange fixiert ist oder auf räumlich definierten Bewegungsachsen bewegbar ist, und wobei das Bauteil durch z. B. ein Transfersystem wie beispielsweise ein Rundschalttisch oder ein Lineartransfersystem, zu- und/oder abgeführt wird.

Zum Stand der Technik wird die DE 92 17 181 U1 genannt.

### Aufgabe und Vorteile der Erfindung

Aufgabe der vorliegenden Erfindung ist es, die einleitend erläuterten Vorrichtungen bzw. Fügezangen zu verbessern. Insbesondere sollen Freifahrprobleme bei solchen Vorrichtungen auf einfache Weise behoben werden. Außerdem sollen Nachteile aufgrund häufig auftretender kritischer Taktzeiten minimiert werden. Kritische Taktzeiten sind insbesondere durch eine vergleichsweise lange Eintauch- bzw. Annäherungszeit der Fügezange zum Bauteil hin und/oder eine vergleichsweise lange Freifahrzeit der Fügezange vom Bauteil weg gekennzeichnet.

Diese Aufgabe wird durch den unabhängigen Anspruch gelöst. Die abhängigen Ansprüche thematisieren vorteilhafte und zweckmäßige Weiterbildungen der Erfindung.

Die Erfindung geht aus von einer Vorrichtung zum Durchsetzfügen eines Bauteils oder zum Setzen eines Fügeelements oder eines Funktionselements an einem Bauteil, umfassend einen Halteabschnitt, mit dem die Vorrichtung an einer Aufnahme in der Umgebung positionierbar ist, und einen Grundkörper, der über eine Lagerstelle am Halteabschnitt gelagert ist, und wobei am Grundkörper eine Matrizeneinheit mit einem Matrizenelement und eine der Matrizeneinheit gegenüberliegende Stempeleinheit mit einem Stempel aufgenommen sind, wobei zur Bewegung des Stempels und/oder des Matrizenelements eine Antriebseinheit vorgesehen ist, die ein linear bewegbares mit dem Stempel oder dem Matrizenelement gekoppeltes Stellelement entlang einer Fügeachse der Vorrichtung reversibel antreibt, um auf das zwischen der Stempeleinheit und der Matrizeneinheit vorhandene Bauteil einzuwirken.

Nachfolgend wird statt dem Begriff "Vorrichtung" der Begriff "Fügezange" gleichwertig und insbesondere nicht einschränkend auf das Fügen verwendet.

Der Kern der Erfindung liegt darin, dass der Grundkörper über die Lagerstelle relativ zum Halteabschnitt bewegbar ist und wobei eine Steuereinrichtung zwischen dem Stellelement und dem Halteabschnitt derart ausgebildet ist, dass abhängig von der Position des Stellelements entlang der Fügeachse aufgrund der angetriebenen Bewegung des Stellelements die Stellung des Grundkörpers relativ zum Halteabschnitt vorgegeben ist. Die Steuereinrichtung bildet eine mechanische Kopplung, über welche das Stellelement, zum Beispiel ein Arbeitskolben einer Antriebseinheit mit einer Kolben-Zylinder-Einheit, vorzugsweise dauerhaft mit dem Halteabschnitt, wie einem Halte- oder Maschinengestell, verbunden ist.

Mit der Steuereinrichtung ist eine Bewegungskopplung zwischen der angetriebenen Linearbewegung des Stellelements und der Bewegung des Grundkörpers relativ zum Halteabschnitt bereitstellbar. Die Linearbewegung des Stellelements erfolgt vorzugsweise relativ zu einem feststehenden Abschnitt, an dem das Stellelement bewegbar gelagert ist. Der feststehende Abschnitt ist zum Beispiel ein das Stellelement umgebendes Gehäuse mit einer Wälzlagereinrichtung zwischen dem Gehäuse und dem Stellelement.

Vorteilhafterweise lässt sich eine Ausgleichbewegung zum Beispiel eines Abschnitts der Vorrichtung bzw. des Grundkörpers, der mit der Stempelseite und/oder der Matrizenseite verbunden ist, zeitgleich mit dem Arbeitshub der Vorrichtung bzw. der Fügezange ausführen. Vorteilhaft erfolgt die Ausgleichbewegung durch die angetriebene Bewegung des Stempels und/oder durch die angetriebene Bewegung des Matrizenelements. Die Ausgleichbewegung ist insbesondere eine mit der Antriebsbewegung zwangsgekoppelte Bewegung. Dabei ist es vorzugsweise so, dass die Antriebseinheit mitbewegt wird mit dem Grundkörper.

Mit der vorgeschlagenen Vorrichtung zum Durchsetzfügen oder zum Setzen von Funktionselementen oder Fügeelementen wird beispielsweise bei maschinenintegrierten Vorrichtungen bzw. Fügezangen das Erfordernis erfüllt, eine optimierte Bewegung des Grundkörpers zu ermöglichen, welche insbesondere eine Ausgleichbewegung umfasst.

Bei maschinenintegrierte Vorrichtungen ergibt sich regelmäßig die Anforderung, eine Bewegung vorzugsweise der gesamten Fügezange in Fügerichtung oder zumindest annähernd in Fügerichtung zu ermöglichen. Dieser Bedarf besteht regelmäßig aufgrund eines notwendigen Herausfahrens der Fügezange aus einem Matrizengesenk, auf dem das Werkstück abgestützt ist, oder aufgrund eines Freifahrens des Bauteils bzw. des Bauteilhalters, um für eine nachfolgende Transferbewegung des Werkstücks einen Freigang zu gewähren. Ein Freifahren der Matrizeneinheit und/oder der Stempeleinheit vom Bauteil weg, wobei das Bauteil vorzugsweise statisch ist, ist damit realisierbar. Vorzugsweise erfolgt das Freifahren der gesamten Vorrichtung weg vom Bauteil simultan mit dem Freifahren der Stempeleinheit vom Bauteil weg und/oder dem Freifahren der Matrizeneinheit vom Bauteil weg.

Der Halteabschnitt bzw. das Halte- bzw. Maschinengestell ist vorzugsweise integraler Bestandteil einer Gesamtmaschine, wie der gesamten Vorrichtung.

Mit der erfindungsgemäßen Vorrichtung lassen sich häufig auftretende Anforderungen auch in Kombination erfüllen, zum Beispiel das einmalige Eintauchen der Fügezange in ein Bauteil und/oder im bzw. am Bauteil. Auch das Ausführen mehrerer Fügevorgänge mit vergleichsweise geringem Freifahrhub zwischen einzelnen Bearbeitungsschritten und/oder das Aus- bzw. Wegfahren der Fügezange vom Bauteil und/oder eine Transferoperation zum nächsten Bauteil lassen sich vorteilhafterweise kombiniert erreichen.

Darüber hinaus lässt sich mit der Erfindung vorzugsweise eine definierte Bewegung der Vorrichtung bzw. Fügezange relativ zum Bauteil während des Fügeprozesses ausführen. Dies ist insbesondere bei einer invertierten Fügerichtung durch Tausch von Stempeleinheit und Matrizeneinheit, was den Antrieb angeht, von Vorteil bzw. notwendig. Dabei ist es bevorzugt bzw. notwendig, dass während des Fügevorgangs das Bauteil räumlich bewegungsfrei bleibt. Hierfür ist es vorzugsweise so, dass während dem Fügevorgang die Fügezange um den Weg, welcher der Stempel bzw. der Niet, das Funktionselement oder das Fügelement in das Bauteil eindringt, synchronisiert gegenbewegt wird. Die Gegenbewegung ist insbesondere in Richtung und/oder Betrag synchronisiert.

Mit der Erfindung sind insbesondere die folgenden Vorteile erzielbar:
- minimaler bis kein Zeitverlust durch zeitgleiche Bewegungen des Stempels bzw. des Matrizenelements einerseits und des Grundkörpers oder anderer Abschnitte andererseits;
- geringere oder kein Ansteuerungsaufwand nötig für Ausgleichbewegung bzw. für Bewegung des Grundkörpers;
- kein wesentlicher bzw. praxisrelevanter zusätzlicher Energiebedarf bzw. -verbrauch;
- weiterer Zeitvorteil bzw. geringere Taktzeit, da durch eine z. B. Teilöffnung der Fügezange, gegenüber einer größeren Öffnung oder einer Komplettöffnung, die Taktzeit weiter optimierbar bzw. verkürzbar ist, es erfolgen Teil- bzw. Partialhübe sowohl des Stempels als auch des Grundkörpers mit der gekoppelten Bewegung bzw. mit der Ausgleichbewegung bzw. mit der Bewegung des Teils, das sich mit der Antriebsbewegung gekoppelt bewegt;
- technisch und konstruktiv einfache und platzsparende bzw. kompakte Lösung;
- wirtschaftlich vorteilhaft bzw. preisgünstig
- vergleichsweise geringe Fehleranfälligkeit.

Der Halteabschnitt ist zum Beispiel feststehend, beispielsweise an einem Gebäudeabschnitt aufgenommen. Der Halteabschnitt ist alternativ z.B. bewegbar an einem Roboterarm vorhanden. Das Bauteil z. B. ein plattenartiges Werkstück ist z. B. einlagig oder mehrlagig bzw. besteht aus mehreren Materiallagen.

Das Stellelement ist vorzugsweise ein Linearbewegungselement wie z. B. ein Teil eines Kolben-Zylinder-Antriebs wie z. B. ein Arbeitskolben der Vorrichtung bzw. der Fügezange. Die Antriebseinheit ist wahlweise insbesondere eine hydropneumatische, pneumatische, hydraulische und/oder eine elektrische Antriebseinheit. Die elektrische Antriebseinheit umfasst vorzugsweise einen Elektromotor vorzugsweise einen elektrischen Spindelantrieb.

Vorteilhafterweise umfasst die Steuereinrichtung eine Führungsbahn und ein entlang der Führungsbahn bewegbares Führungsorgan, vorzugsweise ein entlang der Führungsbahn verschieblich bewegbares Führungsorgan. Die Führungsbahn kann eine Führungskurve bereitstellen für das kurvengeführte Führungsorgan. Mit der bevorzugt kurven- bzw. bahnführenden Steuereinrichtung erfolgt die Kopplung zwischen angetriebener Bewegung des Stellelements bzw. des Stempels oder des Matrizenelements und dem Halteabschnitt. Damit wird bevorzugterweise die Bewegung oder Stellung insbesondere des Grundkörpers zum Halteabschnitt, abhängig von der Bewegung des Stellelements vorgegeben. Damit ist insbesondere abhängig vom zurückgelegten Fahrweg des Stempels oder des Matrizenelements und damit abhängig von einem Abstand eines angetrieben bewegbaren freien Endes des Stempels und/oder des Matrizenelements zum Bauteil eine Ausgleichbewegung des Grundkörpers einrichtbar.

Damit lässt sich insbesondere eine mit der Bewegung des Grundkörpers vorgegebene Ausgleichsbewegung, zum Beispiel eine Schwenkbewegung des Grundkörpers um seine Lagerstelle am Halteabschnitt, und damit der Stempel- und/oder Matrizeneinheit vorteilhaft vorgeben vor- und/oder nach der eigentlichen Verformung des Bauteils. Die Ausgleichbewegung ist insbesondere abgestimmt auf die angetriebene Bewegung des Stempels und/oder des Matrizenelements. Ein Bewegungsweg und eine Bewegungsposition des Grundkörpers lassen sich vorzugsweise exakt räumlich und zeitlich wiederholbar einrichten und insbesondere abgleichen mit einer Antriebsbewegung. Der Abgleich erfolgt vorzugsweise in beide entgegengesetzten Richtungen entlang der Führungsbahn. Dabei ist es auch möglich, dass die Steuereinrichtung ausgebildet ist, dass während der Bewegung des Stellelements, also bei laufender Antriebseinheit, eine Phase existiert, in der keine Bewegung des Grundkörpers relativ zum Halteabschnitt stattfindet. Dann erfolgt lediglich eine Relativbewegung zwischen z. B. dem Stempels und dem Bauteil, entsprechend einem üblichen Fügevorgang bei ruhender Matrizeneinheit und ruhendem Niederhalter, der den Stempel umgibt.

Ein Vorteil liegt darin, dass die Führungsbahn am Halteabschnitt ausgebildet ist. Grundsätzlich kann der Halteabschnitt ein-, zwei- oder mehrteilig sein, bevorzugt einteilig. Beispielsweise kann ein der Antriebseinheit mit dem Stellelement zugewandter Abschnitt des Halteabschnitts die Führungsbahn aufweisen. Der Abschnitt des Halteabschnitts mit der Führungsbahn ist zum Beispiel einem Abschnitt des Halteabschnitts, der an einer festen Einrichtung oder z. B. einem räumlich bewegbaren Roboterarm fixiert ist, abgewandt.

Die Führungsbahn ist passend abgestimmt, beispielsweise als insbesondere längliche einfache oder doppelte oder mehrfache Kurvenbahn, so dass ein auf die Führungsbahn abgestimmtes Führungselement, beispielsweise ein Stift, eine Rolle oder ein Bolzen, in der Führungsbahn stetig geführt, sanft gleitend bzw. gleichmäßig und ruckfrei bewegbar ist.

Vorteilhafterweise umfasst die Steuereinrichtung eine Kulissenführung. Die Kulissenführung umfasst vorzugsweise eine Kulissensteuerung mit einem Getriebeelement. Die Kulissenführung, umfassend z. B. eine Führungsbahn am Halteabschnitt und ein entlang der Führungsbahn geführt bewegbares Getriebeelement ist einfach bereitstellbar, platzsparend, stabil und für eine zuverlässig geführte Bewegung vorteilhaft. Das bahngeführte Getriebeelement ist vorzugsweise ein Führungsorgan am Stellelement. Eine Führungsbahn ist vorzugsweise eine Ausnehmung zum Beispiel in der Art eines Langlochs, gerade und/oder gebogen und/oder mit winkligem Verlauf, z. B. in einem dünnen flachen Material wie einem Blechabschnitt. Vorzugsweise sind entsprechende fluchtende Abschnitte der Führungsbahn in zwei gegenüberliegenden vorzugsweise parallel ausgerichteten Blechabschnitten ausgebildet, insbesondere in genau zwei Blechabschnitten, die in Richtung einer Normalen eines Blechabschnitts beabstandet sind und einen freien Zwischenbereich dazwischen aufweisen.

Die Führungsbahn ist zumindest abschnittsweise in ihrem Verlauf zum Beispiel unstetig und/oder stetig gekrümmt.

Beispielsweise ist die Führungsbahn zum Beispiel die Kulissen-Führungsbahn derart abgestimmt, dass eine Bewegung des Grundkörpers bzw. eine Bewegung der Stempel- und/oder Matrizeneinheit bzw. eines Matrizenelements der Matrizeneinheit relativ zum Bauteil während des Füge- oder Setzvorgangs vermieden oder nahezu vermieden ist.

Ein anderer Vorteil ergibt sich, wenn die Steuereinrichtung nach dem Kniehebelprinzip ausgestaltet ist. Damit lassen sich Hebelkräfte und -momente vorteilhaft bereitstellen. Damit wird die Bewegungskopplung zwischen Stellelement und Grundkörper vorteilhaft bereitstellbar. Vorzugsweise ist die mit der Steuereinrichtung bereitstellbare Bewegungskopplung zwischen der angetriebenen Linearbewegung von Stellelement und der Bewegung des Grundkörpers relativ zum Halteabschnitt nach dem Prinzip der Kniehebelkopplung ausgestaltet.

Es ist darüber hinaus von Vorteil, dass die Steuereinrichtung ein mit dem Stellelement verbundenes Führungsorgan umfasst. Das Führungsorgan ist vorzugsweise fest und vorzugsweise starr mit dem Stellelement verbunden. Das vorzugsweise außen ballige oder konvexe Führungsorgan, wie zum Beispiel ein Stift, eine Rolle, ein Ritzel, ein Reibrad oder ein Bolzen, läuft entlang einer Führungsbahn, wie zum Beispiel der Bahn einer Kulissenführung. Die Führungsbahn weist zum Beispiel ebene oder konturierte, wie zum Beispiel zahnprofilförmige Abschnitte auf, die mit der Außenseite des Führungsorgans in Wirkkontakt gelangen. Entsprechend der Stellelementbewegung, vorzugsweise eine lineare Bewegung, ist das Führungsorgan linear bewegbar mit der Antriebseinheit bzw. bewegt sich fest gekoppelt mit dem Stellelement.

Erfindungsgemäß umfasst die Lagerstelle ein Drehlager. Ein Drehlager ist einfach, platzsparend und stabil einrichtbar.

Die mit dem Drehlager ausgebildete Drehachse steht vorzugsweise senkrecht zur Fügeachse bzw. senkrecht zur Bewegungsrichtung des linear bewegbaren Stellelements. Das Drehlager umfasst zum Beispiel einen länglichen Lagerstift, der z. B. lösbar durch Öffnungen am Grundkörper und/oder Halteabschnitt greift, bzw. durch beispielsweise eine auf den Lagerstift passende Lageröffnung oder vorzugsweise durch zwei oder mehr voneinander beabstandete passende Lageröffnungen greift. Die zumindest eine Lageröffnung ist vorzugsweise im Halteabschnitt vorhanden. Das Drehlager ist vorzugsweise als Gleitlager oder als Wälzköperlager ausgestaltet. Beispielsweise umfasst das Drehlager als Lagerstift eine durch zueinander fluchtende Öffnungen axial durchsteckbare und axial sicherbare Schraube z. B. mit aufschraubbarer Mutter.

Da das Stellelement mit der zum Beispiel Schwenkbewegung des Grundkörpers an der Lagerstelle zum Halteabschnitt bei der angetriebenen Stempel- und/oder Matrizenbewegung mitbewegt wird, sind Bewegungsphasen nicht ausgeschlossen, in denen die räumliche Orientierung bzw. die Neigung der Fügeachse sich verändert.

Gemäß einer vorteilhaften Variante umfasst die Lagerstelle ein Axiallager. Die Lagerstelle zwischen dem Halteabschnitt wie z. B. einem Halte- bzw. Maschinengestell und dem Grundkörper wie z. B. dem Gegenkraftgestell ist vorzugsweise ein Axiallager umfassend z. B. einen linear verfahrbaren Schlitten. An der Lagerstelle des Grundkörpers am Halteabschnitt kann eine lineare Bewegung z. B. schräg zu einer räumlich festen Raumachse vorgegeben werden. Ein Axiallager wird auch als Längslager, Drucklager oder Spurlager bezeichnet.

Nach einer Modifikation der Erfindung ist zur mechanischen Entlastung der Steuereinrichtung eine Entlastungseinrichtung vorgesehen. Damit werden Kräfte und/oder Momente, welche an bzw. auf die Bauteil der Steuereinrichtung wirken, wie z. B. eine Führungsbahn und/oder auf das entlang der Führungsbahn bewegbare Führungsorgan reduziert bis in einen unkritischen Bereich, so dass lediglich tolerierbare Reibungseffekte und/oder keine bleibenden bzw. plastischen Verformungen von Teilen der Steuereinrichtung auftreten.

Die Entlastung umfasst vorzugsweise ein zusätzliches Element, welches insbesondere wirkenden Schwerkrafteinflüssen entgegenwirkt. Ein solches Element stellt Kräfte und/oder Momente bereit und umfasst zum Beispiel eine Feder oder eine Pneumatik-Einrichtung mit einem Pneumatikzylinder und einem Pneumatik-Kolben und/oder eine Hydraulik-Einrichtung. Aufgrund der Konvexform ist auf einfache und stabile Weise das Führungsorgan ausbildbar. Außerdem ist damit das Führungsorgan im Hinblick auf Reibeinflüsse zwischen dem Führungsorgan und Abschnitten der Führungsbahn vorteilhaft gestaltet. Ein Verkanten, ein Rucken oder ein Blockieren des Führungsorgans in der Führungsbahn bei der Bewegung in der Führungsbahn kann vorteilhaft minimiert bzw. vermieden werden.

Das Führungsorgan ist außen vorzugsweise ballig bzw. zum Beispiel im Querschnitt kreisförmig, elliptisch oder in der Form zylindrisch. Das Führungsorgan ist zum Beispiel als Rolle, Walze, Bolzen oder Stift ausgestaltet.

Vorteilhaft ist die Steuereinrichtung derart ausgebildet, dass die Stellung des Grundkörpers relativ zum Halteabschnitt während eines Durchsetzfügevorgangs oder während eines Setzvorgangs unverändert bleibt. Dies ist demgemäß in aller Regel nur phasenweise bzw. nicht über die gesamte Zeit des angetrieben fahrenden Stempels bzw. Stellelements der Fall. Damit lässt sich eine gewünschte Betriebsführung optimieren. Insbesondere sind während der angetriebenen Bewegung des Stempels oder des Matrizenelements auch Phasen möglich, in denen der Grundkörper stillsteht, beispielsweise um das Bauteil z. B. durchgehend zu fixieren und/oder zu stützen.

Auch von Vorteil ist es, wenn die Steuereinrichtung derart ausgebildet ist, dass während eines Durchsetzfügevorgangs oder während eines Setzvorgangs die Richtung und der Betrag der Bewegung der Matrizeneinheit entgegengesetzt der Richtung und dem Betrag der Bewegung des Stempels sind. Dies gilt zum Beispiel für den Fall, dass die Matrizeneinheit auf der wirkenden Seite der Antriebseinheit bzw. des Arbeitskolbens vorhanden ist bzw. wenn auf der Matrizeneinheit-Seite der Antrieb erfolgt bzw. diese angetrieben wird. Die Matrizeneinheit ist dann auf der Seite des Stellelements bzw. dieses ist mit dem angetrieben bewegten Matrizenteil verbunden.

Das Zeit-Weg-Bewegungsprofil der Matrizeneinheit während des Füge- oder Setzvorgangs entspricht zumindest nahezu dem entgegen gerichteten Bewegungsprofil des Stempels. Damit wird beispielsweise erreicht, dass das Bauteil relativ zum Halteabschnitt bzw. zum Maschinengestell und zum Grundkörper bzw. zum Gegenkraftgestell zumindest nahezu in Ruhe bleibt.

Schließlich ist es vorteilhaft, dass die Vorrichtung als Fügezange mit einem C-Bügel ausgestaltet ist. Auch gilt dies für alle anderen Vorrichtungen der Erfindung. Diese Anordnung ist eine bewährte Ausbildung. Die C-Bügel-Fügezange ist zum Beispiel wandfixiert oder an einem Roboterarm befestigbar und räumlich bewegbar. Der C-Bügel bildet zumindest im Wesentlichen den Grundkörper.

### Figurenbeschreibung

Weitere Merkmale und Vorteile der Erfindung sind anhand eines stark schematisiert gezeigten Ausführungsbeispiels näher erläutert. Im Einzelnen zeigt:
- Fig. 1: eine Seitenansicht einer Vorrichtung zum Durchsetzfügen oder zum Setzen eines Elements,
- Fig. 2: die Vorrichtung gemäß Fig. 1 in einem teilgeöffneten Zustand,
- Fig. 3: die Vorrichtung gemäß Fig. 1 in einem geöffneten Zustand,
- Fig. 4: einen Abschnitt eines Bauteils mit einem daran anliegendem Teil einer Matrizeneinheit der Vorrichtung gemäß Fig. 1,
- Fig. 5: den Ausschnitt gemäß Fig. 4 mit Matrizeneinheit und mit einem Teil einer Stempeleinheit der Vorrichtung gemäß Fig. 1 am Ende eines Durchsetzfügevorgangs des Bauteils mit dem dabei umgeformten Bauteil,
- Fig. 6: den Ausschnitt gemäß Fig. 5, wobei der Teil der Stempeleinheit wegbewegt ist,
- Fig. 7: den Ausschnitt gemäß Fig. 6, wobei der Teil der Matrizeneinheit wegbewegt ist vom Bauteil,
- Fig. 8: die geöffnete Vorrichtung gemäß Fig. 1 mit einem bearbeitungsbereit positionierten Bauteil beim Heranbewegen an das Bauteil,
- Fig. 9: die Anordnung gemäß Fig. 8 bei geschlossener Vorrichtung beim Umformen des Bauteils und
- Fig. 10: die Anordnung gemäß Fig. 9 schräg perspektivisch mit drei Bauteilen, deren Transferbewegung relativ zur Vorrichtung angedeutet ist.

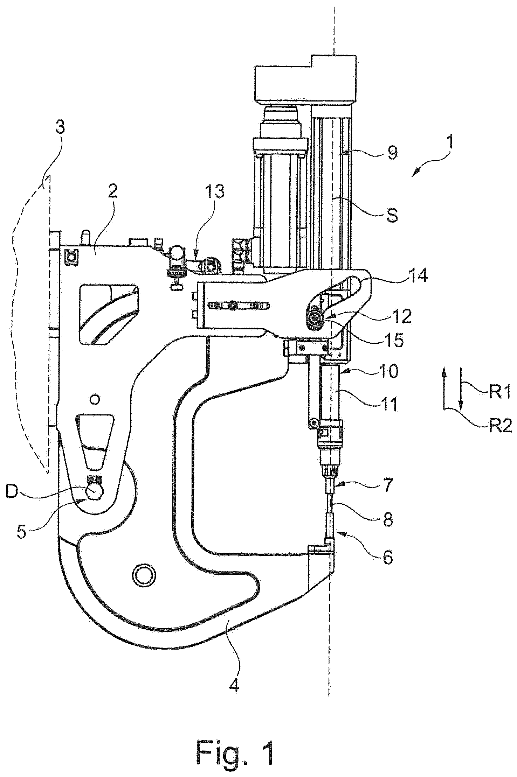

Fig. 1 zeigt eine vollständig zusammengefahrene bzw. geschlossene Vorrichtung 1 zum Durchsetzfügen eines Bauteils B oder zum Setzen eines Füge-, Funktions- oder Verbindungselements an dem Bauteil B. Die Vorrichtung 1 ist z. B. als Füge-, Clinch- oder Stanzzange ausgebildet. Die Vorrichtung 1 mit einer Fügeachse S ist im konkreten Ausführungsbeispiel als Clinchwerkzeug bzw. Werkzeug zum Clinchen bzw. Durchsetzfügen ausgebildet.

Die Vorrichtung 1 umfasst einen Halteabschnitt 2, mit dem die Vorrichtung 1 an einer gestrichelt angedeuteten Aufnahme 3 wie einem Roboterarm oder einer Wand in der Umgebung positionierbar ist. Der Halteabschnitt 2 dient als Haltegestell oder Maschinengestell. Außerdem weist die Vorrichtung 1 einen Grundkörper 4 auf, der über eine Lagerstelle 5 am Halteabschnitt 2 gelagert ist. Die Lagerstelle 5 ist derart ausgebildet, dass der Grundkörper 4 mindestens einen offenen räumlichen Freiheitsgrad besitzt. Die Lagerstelle 5 ist hier z. B. ein Drehlager mit einer Drehachse D quer zur Fügeachse S.

Der Grundkörper 4 ist vorzugsweise als C-Gestell oder C-Bügel gestaltet und dient als Gegenkraftgestell zum Halteabschnitt 2.

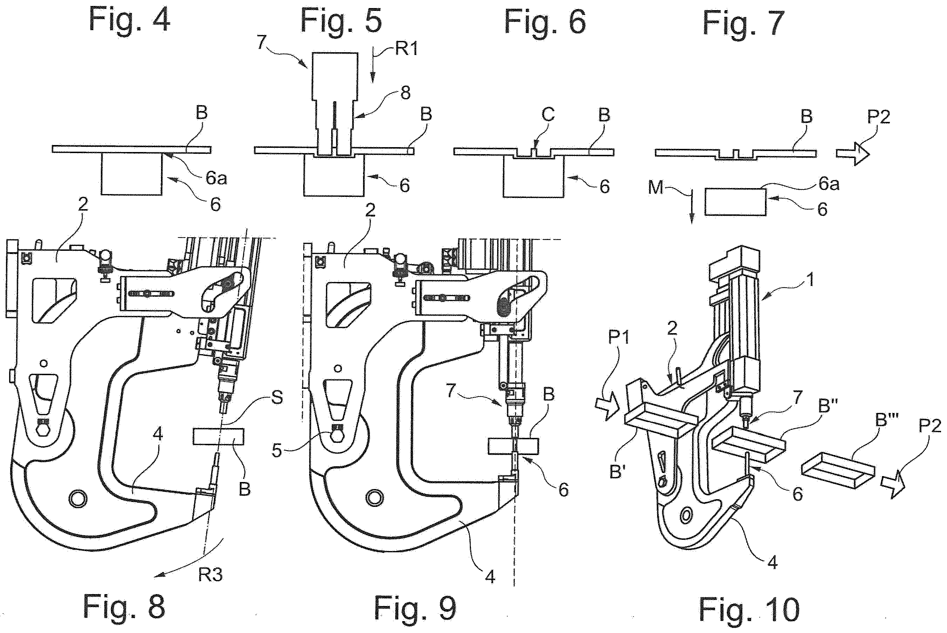

Am Grundkörper 4 sind eine Matrizeneinheit 6 und eine der Matrizeneinheit 6 gegenüberliegende Stempeleinheit 7 mit einem Stempel 8 aufgenommen. Zur reversiblen Bewegung des Stempels 8 ist eine Antriebseinheit 9 vorgesehen, die ein linear bewegbares mit dem Stempel 8 gekoppeltes Stellelement 10 entlang der Fügeachse S der Vorrichtung 1 reversibel antreibt, um auf ein zwischen der Stempeleinheit 7 und der Matrizeneinheit 6 vorhandenes Bauteil B einzuwirken (s. Fig. 4-10).

Mit der Antriebseinheit 9, zum Beispiel ein Pressantrieb, wird das Stellelement 10 angetrieben, das im Ausführungsbeispiel von einem entlang der Fügeachse S linear mit der Antriebseinheit 9 angetrieben bewegbaren Arbeitskolben 11 gebildet wird. Das Stellelement 10 bzw. der Arbeitskolben 11 ist vorne mit dem Stempel 8 verbunden.

Die Fügeachse S ist eine Bewegungsachse bzw. fällt mit der zentrischen Längsachse des Stellelements 10 bzw. des Arbeitskolbens 11 und des Stempels 8 zusammen und geht durch die Matrizeneinheit 6 (s. Fig. 1).

Der Grundkörper 4 ist über die Lagerstelle 5 relativ zum Halteabschnitt 2 bewegbar bzw. um die Drehachse D hin und her schwenkbar. Es ist weiter eine mechanische Kopplung vorhanden, die als Steuereinrichtung 12 zwischen dem Stellelement 10 und dem Halteabschnitt 2 ausgebildet ist. Die Steuereinrichtung 12 gibt vor, dass abhängig von der Position des Stellelements 10 entlang der Fügeachse S aufgrund der angetriebenen Bewegung des Stellelements 10 die Stellung des Grundkörpers 4 relativ zum Halteabschnitt 2 vorgegeben ist.

Es ist weiter ein zusätzliches Element als Entlastungseinrichtung 13 vorhanden, um eine mechanische Entlastung von Elementen der Steuereinrichtung 12 bereitzustellen, insbesondere hinsichtlich dynamischer und statischer Belastungen bzw. Schwerkrafteinflüssen.

Die Steuereinrichtung 12 umfasst eine Führungsbahn 14 und ein entlang der Führungsbahn 14 bewegbares bzw. verschiebliches Führungsorgan 15. Die Führungsbahn 14 ist z. B. eine Kulissenbahn einer Kulissenführung und ist an genau einem oder an zwei gegenüberliegenden Blechabschnitten des Halteabschnitts 2 in einem Bereich ausgebildet, der an die Antriebseinheit 9 mit dem Stellelement 10 heranreicht. Die Führungsbahn 14 weist beispielhaft einen geraden Bahnabschnitt auf, der schräg zur Fügeachse S ausgerichtet ist, welcher über einen gekrümmten Bahnabschnitt in einen kürzeren weiteren geraden Bahnabschnitt übergeht. Der kürzere Bahnabschnitt ist hier in Richtung der Fügeachse S ausgerichtet.

Das Führungsorgan 15 ist beispielsweise ein Bolzen, der mit dem Stellelement 10 bzw. mit dem Arbeitskolben 11 verbunden ist. Eine Längsachse des Bolzens ist quer zur Längsachse des Arbeitskolbens 11 ausgerichtet.

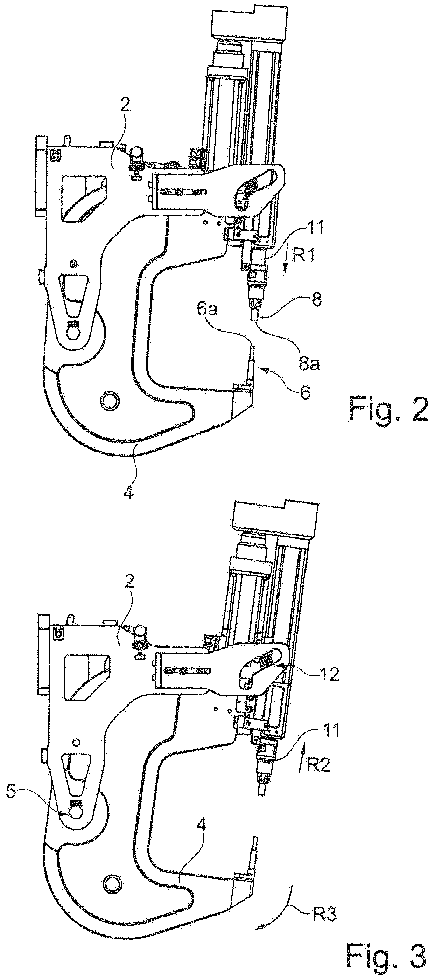

Die Fig. 2 und 3 verdeutlichen den Zusammenhang der Bewegung bzw. Stellung des Arbeitskolbens 11 bzw. des Stellelements 10 und der Ausrichtung des Grundkörpers 4 und damit der daran aufgenommenen Vorrichtungsteile wie Matrizeneinheit 6, Stempeleinheit 7 und Antriebseinheit 9, relativ zum Halteabschnitt 2.

Bei einer in Fig. 2 teilgeöffneten Vorrichtung 1 ist das Stellelement 10 bzw. der Arbeitskolben 11 bzw. der Stempel 8 vergleichsweise weit ausgefahren in Füge- bzw. linearer Bewegungsrichtung R1 bzw. zur Matrizeneinheit 6 hin. Zum Beispiel ist eine freie Stirnseite 8a des Stempels 8 von einer gegenüberliegenden Auflageseite 6a der Matrizeneinheit 6 etwas beabstandet. Der Abstand ist vorzugsweise bei der Teilöffnung gerade so groß, dass gemäß einer regelmäßig variablen jeweiligen Höhe des Bauteils B dieses zwischen der Stirnseite 8a und der Auflageseite 6a gerade noch kollisionsfrei einbringbar ist. Dann ist in vergleichsweise kurzer Taktzeit die Fügezange schließbar, wobei unmittelbar nach dem Schließen der eigentliche Bearbeitungsvorgang des Bauteils beginnt.

Vor und nach dem eigentlichen Bearbeitungsvorgang am Bauteil B wird die gemäß Fig. 3 gezeigte geöffnete Stellung der Vorrichtung 1 bei teilweise oder ganz in Bewegungsrichtung R2 zurückgefahrenem Stellelement 10 bzw. der Arbeitskolben 11 bzw. der Stempel 8 eingenommen. Dies kann z. B. bei einem an das Bauteil B herangefahrenen Roboterarm 3 mit der Vorrichtung 1 der Fall sein. Die geöffnete Stellung erfolgt gesteuert bzw. selbsttätig abhängig von der Stellung des Stellelements 10. Das Bauteil B hat genügend Platz zwischen der Stempeleinheit 7 und der Matrizeneinheit 6 eingebracht bzw. platziert zu werden, also seitlich hin- und wieder wegbewegt zu werden, was Fig. 8 zum Beispiel für das Hinbewegen des Bauteils B in Richtung P1 (s. Fig. 10) zwischen Stempeleinheit 7 und Matrizeneinheit 6 zeigt. Figur 7 verdeutlicht, dass das fertig bearbeitete Bauteil B in Richtung P2 weitertransportiert bzw. transferiert wird, weg aus dem Bereich zwischen den dabei ausreichend weit voneinander beabstandeten Stempeleinheit 7 und Matrizeneinheit 6.

Fig. 10 verdeutlicht, dass bei einer getakteten Bearbeitung von einer Mehrzahl von Bauteilen B', B'', B‴ nacheinander die Bearbeitung jeweils einzelner Bauteile durch Transport in die Richtung P1 des noch nicht bearbeiteten Bauteils B' zur Vorrichtung hin erfolgt, das Bauteil B" gerade bearbeitet wird und das Bauteil B‴ bereits bearbeitet ist und in Richtung P2 wegtransportiert wird (s. auch Fig. 7).

Gemäß der Bearbeitungsstellung bei geschlossener Vorrichtung 1 aus Fig. 5 und 9 steht die Fügeachse S vorzugsweise senkrecht zu einer am Bauteil B zu bearbeitenden Fläche.

Gemäß Fig. 8 sind Stempel- 7 und Matrizeneinheit 6 auseinander gefahren, die Vorrichtung 1 bzw. die Fügezange ist geöffnet, und die Fügeachse S steht schräg zur am Bauteil B zu bearbeitenden Fläche des heranbewegten Bauteils B.

Die Fig. 4 bis 7 zeigen nacheinander ablaufende Schritte am Bauteil B bei dessen Bearbeitung mit der Vorrichtung 1. In den Figuren 8-10 ist perspektivisch die jeweilige Stellung der Vorrichtung 1 im dazugehörigen Bearbeitungsschritt des Bauteils B dargestellt.

Gemäß Fig. 4 ist das zu bearbeitende Bauteil B aufgelegt auf der Auflageseite 6a der Matrizeneinheit 6 bei teils geöffneter Clinchzange bzw. teil geöffneter Vorrichtung 1. Der Stempel 8 ist noch entfernt vom Bauteil B.

Gemäß Fig. 5 taucht der als Doppelstempel ausgebildete Stempel 8 unter einer Bewegung des Stempels 8 in das Bauteil ein und verformt dieses in einem Doppel-Clinchpunkt C am Bauteil B. Dabei fährt das Stellelement 10 bzw. der Arbeitskolben 11 angetrieben in Richtung R1 (s. Fig. 5, 9). Nach der Umformung fährt der Stempel 8 angetrieben zurück in Richtung R2, weg vom Bauteil B.

Dabei schwenkt gekoppelt über die Steuereinrichtung 12 der Grundkörper 4 in Richtung R3 weg von dem Bauteil B unter weiterer Bewegung des Stellelements 10 in Richtung R2 (s. Fig. 3). Die Matrizeneinheit 6 entfernt sich vom Bauteil B in Richtung M was durch das Schwenken des Grundkörpers 4 und der daran vorhandenen Elemente der Vorrichtung 1 im Uhrzeigersinn in Richtung R3 (s. Fig. 3) um die Lagerstelle 5 erfolgt. Das Bauteil B ist frei von Stempel- und Matrizeneinheit und wird in Transferrichtung P2 weiterbewegt relativ zur Matrizeneinheit 6, was durch z. B. eine Transfereinrichtung (nicht gezeigt) erfolgen kann.

### Bezugszeichenliste

- 1: Vorrichtung
- 2: Halteabschnitt
- 3: Aufnahme
- 4: Grundkörper
- 5: Lagerstelle
- 6: Matrizeneinheit
- 6a: Auflageseite
- 7: Stempeleinheit
- 8: Stempel
- 8a: Stirnseite
- 9: Antriebseinheit
- 10: Stellelement
- 11: Arbeitskolben
- 12: Steuereinrichtung
- 13: Entlastungseinrichtung
- 14: Führungsbahn
- 15: Führungsorgan

## Patentansprüche

1. Vorrichtung (1) zum Durchsetzfügen eines Bauteils oder zum Setzen eines Fügeelements oder eines Funktionselements an einem Bauteil, umfassend einen Halteabschnitt (2), mit dem die Vorrichtung (1) an einer Aufnahme (3) in der Umgebung positionierbar ist, und einen Grundkörper (4), der über eine Lagerstelle (5) am Halteabschnitt (2) gelagert ist, und wobei am Grundkörper (4) eine Matrizeneinheit (6) mit einem Matrizenelement und eine der Matrizeneinheit (6) gegenüberliegende Stempeleinheit (7) mit einem Stempel (8) aufgenommen sind, wobei zur Bewegung des Stempels (8) und/oder des Matrizenelements eine Antriebseinheit (9) vorgesehen ist, die ein linear bewegbares mit dem Stempel (8) oder dem Matrizenelement gekoppeltes Stellelement (10) entlang einer Fügeachse der Vorrichtung (1) reversibel antreibt, um auf das zwischen der Stempeleinheit (7) und der Matrizeneinheit (6) vorhandene Bauteil einzuwirken, wobei der Grundkörper (4) über die Lagerstelle (5) relativ zum Halteabschnitt (2) bewegbar ist und wobei eine Steuereinrichtung (12) zwischen dem Stellelement (10) und dem Halteabschnitt (2) derart ausgebildet ist, dass abhängig von der Position des Stellelements (10) entlang der Fügeachse aufgrund der angetriebenen Bewegung des Stellelements (10) die Stellung des Grundkörpers (4) relativ zum Halteabschnitt (2) vorgegeben ist, **dadurch gekennzeichnet, dass** die Lagerstelle (5) ein Drehlager umfasst.

2. Vorrichtung nach Anspruch 1, **dadurch gekennzeichnet, dass** die Steuereinrichtung (12) eine Führungsbahn (14) und ein entlang der Führungsbahn (14) bewegbares Führungsorgan (15) umfasst.

3. Vorrichtung nach Anspruch 1 oder Anspruch 2, **dadurch gekennzeichnet, dass** die Führungsbahn (14) am Halteabschnitt (2) ausgebildet ist.

4. Vorrichtung nach einem der vorhergehenden Ansprüche, **dadurch gekennzeichnet, dass** die Steuereinrichtung (12) eine Kulissenführung umfasst.

5. Vorrichtung nach einem der vorhergehenden Ansprüche, **dadurch gekennzeichnet, dass** die Steuereinrichtung (12) nach dem Kniehebelprinzip ausgestaltet ist.

6. Vorrichtung nach einem der vorhergehenden Ansprüche, **dadurch gekennzeichnet, dass** die Steuereinrichtung (12) ein mit dem Stellelement (10) verbundenes Führungsorgan (15) umfasst.

7. Vorrichtung nach einem der vorhergehenden Ansprüche, **dadurch gekennzeichnet, dass** die Lagerstelle (5) ein Axiallager umfasst.

8. Vorrichtung nach einem der vorhergehenden Ansprüche, **dadurch gekennzeichnet, dass** zur mechanischen Entlastung der Steuereinrichtung (12) eine Entlastungseinrichtung (13) vorgesehen ist.

9. Vorrichtung nach einem der vorhergehenden Ansprüche, **dadurch gekennzeichnet, dass** das Führungsorgan (15) außen konvex geformt ist.

10. Vorrichtung nach einem der vorhergehenden Ansprüche, **dadurch gekennzeichnet, dass** die Steuereinrichtung (12) derart ausgebildet ist, dass die Stellung des Grundkörper (4) relativ zum Halteabschnitt (2) während eines Durchsetzfügevorgangs oder während eines Setzvorgangs unverändert bleibt.

11. Vorrichtung nach einem der vorhergehenden Ansprüche, **dadurch gekennzeichnet, dass** die Steuereinrichtung (12) derart ausgebildet ist, dass während eines Durchsetzfügevorgangs oder während eines Setzvorgangs die Richtung und der Betrag der Bewegung der Matrizeneinheit (6) entgegengesetzt der Richtung und dem Betrag der Bewegung des Stempels (8) sind.

12. Vorrichtung nach einem der vorhergehenden Ansprüche, **dadurch gekennzeichnet, dass** die Vorrichtung (1) als Fügezange mit einem C-Bügel ausgestaltet ist.

## Claims

1. Apparatus (1) for clinching a component or for setting a joining element or a functional element on a component, comprising a retention portion (2), with which the apparatus (1) can be positioned on a receiving member (3) in the environment, and a base member (4) which is supported via a bearing location (5) on the retention portion (2), and wherein a bottom die unit (6) having a bottom die element is received on the base member (4) and a stamp unit (7) which is opposite the bottom die unit (6) and which has a stamp (8) is received, wherein there is provided in order to move the stamp (8) and/or the bottom die element a drive unit (9) which reversibly drives a linearly movable actuation element (10), which is coupled to the stamp (8) or the bottom die element, along a joining axis of the apparatus (1) in order to act on the component which is present between the stamp unit (7) and the bottom die unit (6), wherein the base member (4) is movable via the bearing location (5) relative to the retention portion (2) and wherein a control device (12) is constructed between the actuation element (10) and the retention portion (2) in such a manner that the position of the base member (4) relative to the retention portion (2) is predetermined in accordance with the position of the actuation element (10) along the joining axis as a result of the driven movement of the actuation element (10), **characterized in that** the bearing location (5) comprises a rotary bearing.

2. Apparatus according to Claim 1, **characterized in that** the control device (12) comprises a guide path (14) and a guide member (15) which can be moved along the guide path (14).

3. Apparatus according to Claim 1 or Claim 2, **characterized in that** the guide path (14) is constructed on the retention portion (2).

4. Apparatus according to one of the preceding claims, **characterized in that** the control device (12) comprises a slotted guide member.

5. Apparatus according to one of the preceding claims, **characterized in that** the control device (12) is configured in accordance with the knuckle-lever principle.

6. Apparatus according to one of the preceding claims, **characterized in that** the control device (12) comprises a guide member (15) which is connected to the actuation element (10).

7. Apparatus according to one of the preceding claims, **characterized in that** the bearing location (5) comprises an axial bearing.

8. Apparatus according to one of the preceding claims, **characterized in that** a pressure-reduction device (13) is provided in order to mechanically reduce the pressure on the control device (12).

9. Apparatus according to one of the preceding claims, **characterized in that** the guide member (15) is externally formed in a convex manner.

10. Apparatus according to one of the preceding claims, **characterized in that** the control device (12) is constructed in such a manner that the position of the base member (4) relative to the retention portion (2) remains unchanged during a clinching operation or during a setting operation.

11. Apparatus according to one of the preceding claims, **characterized in that** the control device (12) is constructed in such a manner that during a clinching operation or during a setting operation the direction and the amount of the movement of the bottom die unit (6) are counter to the direction and amount of the movement of the stamp (8).

12. Apparatus according to one of the preceding claims, **characterized in that** the apparatus (1) is in the form of a set of joining tongs with a C-shaped bracket.

## Revendications

1. Dispositif (1) d'assemblage par rivetage d'un composant ou de mise en place d'un élément d'assemblage ou d'un élément fonctionnel sur un composant, comprenant une section de maintien (2), avec laquelle le dispositif (1) peut être positionné sur un logement (3) dans l'environnement, et un corps de base (4), qui est monté sur la section de maintien (2) par un emplacement de montage (5), et une unité de matrice (6) avec un élément de matrice et une unité de poinçon (7), faisant face à l'unité de matrice (6), avec un poinçon (8) étant logées sur le corps de base (4), une unité d'entraînement (9), qui entraîne de manière réversible un élément de réglage (10) pouvant être déplacé linéairement, couplé au poinçon (8) ou à l'élément de matrice le long d'un axe d'assemblage du dispositif (1) étant prévue pour déplacer le poinçon (8) et/ou l'élément de matrice pour agir sur le composant présent entre l'unité de poinçon (7) et l'unité de matrice (6), le corps de base (4) pouvant être déplacé par rapport à la section de maintien (2) par l'emplacement de montage (5) et un système de commande (12) étant réalisé entre l'élément de réglage (10) et la section de maintien (2) de telle manière que la position du corps de base (4) par rapport à la section de maintien (2) est spécifiée en fonction de la position de l'élément de réglage (10) le long de l'axe d'assemblage suite au déplacement entraîné de l'élément de réglage (10), **caractérisé en ce que** l'emplacement de montage (5) comprend un palier rotatif.

2. Dispositif selon la revendication 1, **caractérisé en ce que** le système de commande (12) comprend une voie de guidage (14) et un organe de guidage (15) pouvant être déplacée le long de la voie de guidage (14).

3. Dispositif selon la revendication 1 ou la revendication 2, **caractérisé en ce que** la voie de guidage (14) est réalisée sur la section de maintien (2).

4. Dispositif selon une des revendications précédentes, **caractérisé en ce que** le système de commande (12) comprend un guide à coulisse.

5. Dispositif selon une des revendications précédentes, **caractérisé en ce que** le système de commande (12) est conçu selon le principe du levier coudé.

6. Dispositif selon une des revendications précédentes, **caractérisé en ce que** le système de commande (12) comprend un organe de guidage (15) relié à l'élément de réglage (10).

7. Dispositif selon une des revendications précédentes, **caractérisé en ce que** l'emplacement de montage (5) comprend un palier axial.

8. Dispositif selon une des revendications précédentes, **caractérisé en ce qu'**un système de décharge (13) est prévu pour décharger mécaniquement le système de commande (12).

9. Dispositif selon une des revendications précédentes, **caractérisé en ce que** l'organe de guidage (15) est formé de manière convexe à l'extérieur.

10. Dispositif selon une des revendications précédentes, **caractérisé en ce que** le système de commande (12) est réalisé de telle manière que la position du corps de base (4) reste inchangée par rapport à la section de maintien (2) pendant une opération d'assemblage par rivetage ou pendant une opération de mise en place.

11. Dispositif selon une des revendications précédentes, **caractérisé en ce que** le système de commande (12) est réalisé de telle manière que pendant une opération d'assemblage par rivetage ou pendant une opération de mise en place, la direction et l'ampleur du déplacement de l'unité de matrice (6) sont opposées à la direction et à l'ampleur du déplacement du poinçon (8).

12. Dispositif selon une des revendications précédentes, **caractérisé en ce que** le dispositif (1) est configuré en tant que pince d'assemblage avec un étrier en C.
